# FASCICULE DE BREVET EUROPEEN

(11) **EP 0 311 484 B1**
(45) Date de publication et mention de la délivrance du brevet: **10.11.1993**
(21) Numéro de dépôt: 88402429.0
(22) Date de dépôt: 27.09.1988
(51) Int. Cl.: G01P 15/02, G01P 15/125, G01P 15/13

(54) **Capteur accélérométrique à structure pendulaire plane**
Flacher Pendelbeschleunigungsaufnehmer
Flat acceleration sensor with a pendulum piece

(30) Priorité: 02.10.1987 FR 8713619
(43) Date de publication de la demande: 12.04.1989
(73) Titulaire: SEXTANT AVIONIQUE S.A., F-92366 Meudon la Forêt Cédex (FR)
(72) Inventeur: Boura, André, FR-86100 Chatellerault (FR)
(74) Mandataire: de Saint-Palais, Arnaud Marie

(56) Documents cités:
- EP-A- 0 198 724
- DE-C- 667 507
- US-A- 2 702 186

## Description

La présente invention concerne un accéléromètre utilisant un capteur accélérométrique à structure pendulaire plane du type de celles qui se trouvent décrites dans le brevet européen No 0157663 déposé au nom de la Demanderesse.

On rappelle que selon le brevet européen No 0157663, cette structure pendulaire est réalisée par micro-usinage d'un substrat consistant en une fine plaquette de quartz (ou autre mono-cristal) et par dépôt sous vide de surfaces conductrices judicieusement disposées. Elle comprend une masse mobile plate (ou corps d'épreuve) suspendue au reste de la structure par l'intermédiaire de deux lames minces parallèles situées de part et d'autre de ladite masse.

Ces lames de suspension ont pour épaisseur l'épaisseur du substrat et sont extrêmement étroites. Elles permettent à la masse mobile de se déplacer en translation dans une direction parallèle au plan du substrat en n'opposant qu'une faible force de rappel élastique, de sorte que l'axe sensible du capteur est situé dans le plan du substrat.

Ces lames de suspension portent des conducteurs assurant la continuité électrique entre des plages métallisées liées à la masse mobile et des zones de raccordement situées sur la partie fixe du substrat.

Par ailleurs, ce brevet propose, pour l'asservissement de la position de la masse d'épreuve par rapport au reste de la structure, un moteur de rappel utilisant la force de Laplace obtenue par l'action d'une induction magnétique sur un courant circulant dans au moins une bobine imprimée sur l'une des faces de la masse mobile.

La demande européenne EP-A-198724 déposée également au nom de la Demanderesse le 5 Février 1986 propose, pour l'asservissement de la position de la masse d'épreuve par rapport au reste de la structure, d'utiliser des forces électrostatiques générées au moyen de tensions appliquées à des surfaces métalliques en regard.

Dans les deux cas, la flexion en S des deux lames de suspension dans le plan du substrat permet un mouvement de translation au corps d'épreuve, dans la direction de l'axe sensible. Lorsque la masse d'épreuve s'éloigne de sa position d'équilibre, sous l'effet de l'accélération à mesurer, la direction moyenne des lames de suspension n'est plus exactement perpendiculaire à la direction initiale de l'axe sensible.

De ce fait, l'appareil acquiert une sensibilité à la composante de l'accélération perpendiculaire à l'axe sensible initial. Sur un accéléromètre asservi, ceci provoque entre autres effets, une erreur de mesure dite de vibropendulosité en fonctionnement dynamique. Sur un accéléromètre non asservi, on obtient entre autres effets un décalage de l'orientation de l'axe sensible effectif par rapport au boîtier du capteur.

L'invention a donc plus particulièrement pour objet un accéléromètre utilisant un capteur accélérométrique du type susdit mais perfectionné de manière à diminuer fortement la sensibilité à l'accélération transverse de la structure de détection, lorsqu'elle subit une accélération dirigée selon son axe d'entrée.

De façon plus précise, ce capteur accélérométrique comprend une structure pendulaire plane, monolithique, formée par une lame cristalline usinée de manière à présenter une cavité à l'intérieur de laquelle se trouve suspendu un corps d'épreuve par au moins une première et une deuxième lames parallèles, solidaires d'une partie fixe de ladite structure et flexibles dans le plan dudit corps d'épreuve, de manière à pouvoir se déplacer en translation dans ledit plan, selon un axe perpenduculaire auxdites lames.

Selon l'invention, le susdit corps d'épreuve comprend au moins un élément de support mobile, relié auxdites lames flexibles et une masse d'épreuve suspendue audit élément de support par au moins une troisième et une quatrième lames parallèles aux précédentes et flexibles dans le plan dudit corps d'épreuve.

Avantageusement, les susdites troisième et quatrième lames présentent une longueur sensiblement égale à celle des susdites première et deuxième lames, et sont agencées ce manière à ce qu'en présence d'une accélération selon le susdit axe sensible, on obtienne une compensation des déplacements transverses de la masse d'épreuve engendrés par les déformations des première et deuxième lames, grâce aux déplacements en sens inverse engendrés par les déformations des troisième et quatrième lames.

Selon un autre mode d'exécution de l'invention, la susdite masse d'épreuve est montée sur la partie fixe par l'intermédiaire d'une double suspension symétrique faisant intervenir deux éléments de support mobiles montés, chacun, sur la structure fixe au moyen de deux lames flexibles parallèles, et deux paires de lames parallèles reliant respectivement ces deux éléments de support à la masse d'épreuve.

Des modes de réalisation de l'invention seront décrits ci-après, à titre d'exemples non limitatifs, avec référence aux dessins annexés dans lesquels :
La figure 1 représente, vu de face, un capteur accélérométrique selon l'invention, de type à simple suspension ; et
La figure 2 est une vue similaire d'un capteur accélérométrique de type à double suspension symétrique.

Il convient de noter tout d'abord que dans ces deux exemples, le capteur accélérométrique comprend une structure pendulaire plane réalisée en une seule pièce par microusinage d'une lame cristalline, par exemple en silicium ou en quartz, pouvant par ailleurs servir de substrat à un circuit électronique intégré.

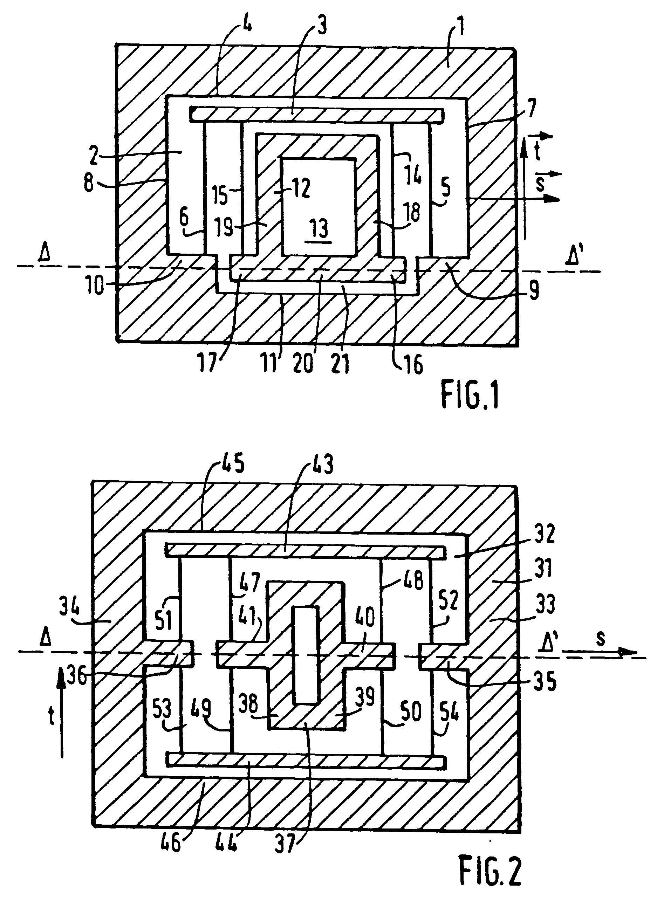

Dans l'exemple de la figure 1, cette lame cristalline est usinée de manière à former un cadre extérieur 1 délimitant une cavité 2 de forme sensiblement rectangulaire à l'intérieur de laquelle se trouve suspendu le corps d'épreuve. Celui-ci se compose tout d'abord d'une barre 3 qui s'étend à l'intérieur de la cavité 2 parallèlement et à proximité de l'une des bordures longitudinales 4 du cadre 1. Cette barre 3 se trouve suspendue au moyen de deux lames flexibles 5, 6 qui s'étendent parallèlement aux bordures transversales 7, 8 du cadre 1. Ces deux lames flexibles 5, 6 relient respectivement les deux portions extrêmes de la barre 3 à deux portions latérales 9, 10 de la bordure longitudinale 11 du cadre 1.

La barre 3 constitue un élément de support mobile sur lequel est suspendue une masse d'épreuve 12 de forme rectangulaire munie ou non d'un ajourement central 13, et dont les bordures s'étendent sensiblement parallèlement aux bordures du cadre 1.

La suspension de cette masse d'épreuve 12 est assurée au moyen de deux lames flexibles 14, 15 parallèles aux lames 5, 6 qui relient la barre 3 à deux protubérances latérales 16, 17 prévues sur les bordures latérales 18, 19 de la masse 12 et qui s'étendent en saillie vers l'extérieur dans le prolongement de la bordure longitudinale 20.

Pour faire en sorte que les lames 5, 6 et 14, 15 présentent une même longueur, la bordure longitudinale 11 du cadre 1 présente, entre ses portions latérales 9, 10, un évidement rectangulaire 21 dans lequel vient partiellement s'engager la masse d'épreuve 12, de telle manière que les points d'ancrage des lames flexibles 5, 6 sur les protubérances 16, 17 soient au même niveau que les points d'ancrage des lames flexibles 14, 15 sur les portions latérales 9, 10.

Tel que précédemment décrit, le corps d'épreuve formé par la barre 3, les deux lames flexibles 14, 15 et la masse d'épreuve 12 s'étend donc dans la zone comprise entre les deux lames flexibles 5, 6, conformément au principe du capteur accélérométrique faisant l'objet du brevet européen No 0157663.

Il apparaît clairement qu'en présence d'une accélération le long de l'axe sensible S (qui est perpendiculaire aux lames flexibles 5, 6, 14, 15) les lames 5 et 6 subiront une déformation en flexion et présenteront alors une forme en S orientée dans un premier sens, tandis que les lames 14 et 15 également sujettes à une déformation en flexion, présenteront une forme en S orientée dans un deuxième sens opposé au premier.

Parallèlement, le déplacement relatif de la masse d'épreuve 12 par rapport à la barre 3 dans le sens transverse t, perpendiculaire à l'axe sensible S, engendré par la déformation des lames flexibles 14, 15, sera compensé par un déplacement relatif correspondant de la barre 3 par rapport au cadre 1, engendré par les déformations des lames flexibles 5, 6. On obtient donc dans ce cas une annulation des déplacements de la masse d'épreuve 12 par rapport au cadre 1 dans la direction transverse t.

Par ailleurs, si on applique en outre à l'ensemble du capteur accélérométrique une accélération dans la direction transverse 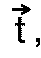 , les lames 5 et 6 voient leur flexion augmenter alors que les lames 14 et 15 voient la leur diminuer. Un dimensionnement adéquat des lames de suspension et des corps suspendus (barre 3 et masse d'épreuve 12) permet d'obtenir un déplacement essentiellement nul de la masse 12 dans la direction 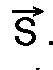 . Ceci constitue la condition essentielle qu'il convient de réaliser pour que le capteur accélérométrique soit insensible à la composante d'accélération dirigée selon l'axe 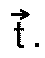 .

Ces différents résultats peuvent être également obtenus à l'aide du capteur accélérométrique représenté sur la figure 2, dans lequel la masse d'épreuve est portée par une double suspension symétrique et dont la structure est obtenue par une symétrisation du capteur représenté sur la figure 1 par rapport à l'axe de symétrie ΔΔ'.

Selon ce mode de réalisation, le cadre 31 délimite une cavité 32 de forme sensiblement rectangulaire et présente deux bordures latérales 33, 34 respectivement pourvues, dans leurs régions centrales, de deux protubérances ou languettes rentrantes 35, 36 de forme rectangulaire qui s'étendent selon l'axe ΔΔ'.

La masse d'épreuve 37 présente, quant à elle, une forme rectangulaire dont les bordures latérales 38, 39 sont munies, dans leurs régions médianes, de deux protubérances ou languettes respectives 40, 41 qui s'étendent en saillie, au droit des languettes 35, 36.

Cette masse d'épreuve 37 est suspendue à deux barres 43, 44 qui s'étendent parallèlement aux bordures longitudinales 45, 46 du cadre 31, de part et d'autre de la masse 37, au moyen de quatre lames flexibles, à savoir :
- deux lames flexibles 47, 48 reliant les deux languettes 40, 41 à la barre 43, et
- deux lames flexibles 49, 50 reliant les deux languettes 40, 41 à la barre 44.

La barre 43 se trouve suspendue au cadre 31 grâce à deux lames flexibles 51, 52 reliant respectivement ses deux portions extrêmes aux deux languettes 35 et 36.

De même, la barre 44 est suspendue au cadre 31 grâce à deux lames flexibles 53, 54 reliant respectivement ses deux portions extrêmes aux deux languettes 35 et 36.

Dans cet exemple, au repos, les lames flexibles 47 à 54 sont toutes parallèles à l'axe transverse t et présentent une même longueur. La masse d'épreuve 37 est située dans l'espace défini par les quatre lames 47 à 50 qui la soutiennent (et non plus entre deux lames comme précédemment).

Le principe de fonctionnement de ce capteur accélérométrique est semblable au précédent, chacune des deux suspensions produisant sur le corps d'épreuve un effet identique.

On remarquera que dans le premier mode d'exécution, on obtient une raideur effective de la suspension dans la direction de l'axe sensible S deux fois plus faible que dans les modes d'exécution décrits dans le brevet européen No 0157663, toutes choses égales par ailleurs (c'est-à-dire pour des dimensions fixées des lames et de la masse d'épreuve). Cet avantage n'existe pas dans le deuxième mode d'exécution, inconvénient compensé par une meilleure symétrisation des efforts.

## Revendications

1. Capeur accélérométrique comprenant une structure pendulaire plane, monolithique, formée par une lame cristalline usinée de manière à présenter une cavité (2) à l'intérieur de laquelle se trouve suspendu un corps d'épreuve par au moins une première et une deuxième lames parallèles (5, 6) solidaires d'une partie fixe de ladite structure et flexibles dans le plan dudit corps d'épreuve, de manière à pouvoir se déplacer en translation dans ledit plan, selon un axe perpendiculaire auxdites lames (5, 6),
caractérisé en ce que ledit corps d'épreuve comprend un élément de support mobile (3) relié auxdites lames flexibles (5, 6) et une masse d'épreuve (12) suspendue audit élément de support (3) par au moins une troisième et une quatrième lames (14, 15) parallèles aux précédentes, et flexibles dans le plan dudit corps d'épreuve.

2. Capteur accélérométrique selon la revendication 1, caractérisé en ce que les susdites troisième et quatrième lames (14, 15) présentent une longueur sensiblement égale à celle des susdites première et deuxième lames (5, 6), et sont agencées de manière à ce qu'en présence d'une accélération selon le susdit axe sensible (S), on obtienne une compensation des déplacements transverses de la masse d'épreuve (12) engendrés par les déformations des première et deuxième lames (5, 6), grâce aux déplacements en sens inverse engendrés par les déformations des troisième et quatrième lames (14, 15).

3. Capteur accélérométrique selon la revendication 1, caractérisé en ce que la susdite cavité (2) présente une forme sensiblement rectangulaire, et en ce que le susdit corps d'épreuve comprend une barre (3) qui s'étend parallèlement à l'axe longitudinal de la cavité et dont les portions extrêmes sont reliées à l'une des bordures longitudinales (11) du cadre (1), par une première et une deuxième lames flexibles (5, 6) perpendiculaires audit axe, et en ce que sur cette barre (3) est suspendue une masse d'épreuve (12) au moyen d'une troisième et d'une quatrième lames flexibles (14, 15) parallèles aux deux premières (5, 6), l'ensemble formé par cette masse d'épreuve (12) et les troisième et quatrième lames flexibles (14, 15) s'étendant au moins partiellement dans le volume compris entre les deux premières lames flexibles (5, 6).

4. Capteur accélérométrique selon la revendication 3, caractérisé en ce que la susdite bordure longitudinale (11) comprend deux portions latérales (9, 10) sur lesquelles viennent respectivement s'ancrer les deux premières lames flexibles (5, 6), et un évidement central (21) dans lequel vient partiellement s'engager la masse d'épreuve (12) pour faire en sorte que les points d'ancrage des troisième et quatrième lames flexibles (14, 15) sur ladite masse d'épreuve (12) se trouvent au même niveau que les points d'ancrage des deux premières lames (5, 6) sur ladite bordure latérale (11).

5. Capteur accélérométrique selon la revendication 1, caractérisé en ce que la susdite masse d'épreuve (37) est montée sur la partie fixe par l'intermédiaire d'une double suspension symétrique faisant intervenir deux éléments de support mobiles (43, 44) montés, chacun, sur la structure fixe au moyen de deux lames flexibles parallèles (51 à 54), et deux paires de lames parallèles (47 à 50) reliant respectivement ces deux éléments de support (43, 44) à la masse d'épreuve (37).

6. Capteur accélérométrique selon la revendication 5, caractérisé en ce que la susdite structure pendulaire est réalisée à l'aide d'une lame cristalline usinée de manière à former un cadre extérieur (31) délimitant une cavité (32) de forme sensiblement rectangulaire, et dont les bordures latérales (33, 34) présentent deux protubérances rentrantes (35, 36) qui s'étendent sensiblement selon l'axe longitudinal de symétrie (ΔΔ′) de la cavité (32), en ce que la susdite masse d'épreuve (37) présente une forme sensiblement rectangulaire et est munie de deux protubérances latérales (40, 41) situées au droit desdites protubérances rentrantes (35, 36), en ce que cette masse d'épreuve (37) est suspendue à deux barres longitudinales (43, 44) situées de part et d'autre de ladite masse (37), par l'intermédiaire de quatre lames flexibles transversales (47 à 50) ancrées sur lesdites protubérances latérales (40, 41), et en ce que lesdites barres (43, 44) sont chacune suspendues sur le cadre (31) au moyen de deux lames flexibles (51 à 54) respectivement ancrées sur lesdites protubérances rentrantes (35, 36).

## Claims

1. An accelerometric sensor comprising a plane monolithic pendulum structure formed by a crystalline blade machined so as to present a cavity (2) inside which a test body is suspended by at least a first and second parallel blade (5, 6), interlocked with a fixed part of said structure and flexible in the plane of the said test body, in order to be able to move in translation in the said plane according to a sensitive axis perpendicular to the said blades (5, 6),
characterized in that the said test body comprises a moving support element (3) linked to the said flexible blades (5, 6) and a test mass (12) suspended to the said support element (3) by at least a third and a fourth blade (14, 15) parallel to the above mentioned ones and flexible in the plane of the said test body.

2. An accelerometric sensor as claimed in claim 1,
characterized in that the said third and fourth blades (14, 15) present a length substantially equal to that of the said first and second blades (5, 6) and are arranged in such a way that, in presence of an acceleration according to the said sensitive axis (S), a compensation of the transverse displacements of the test mass (12) produced by the deformations of the first and second blades (5, 6) is obtained, thanks to the displacements in opposite directions produced by the deformations of the third and fourth blades (14, 15).

3. An accelerometric sensor as claimed in claim 1,
characterized in that the said cavity (2) presents a substantially rectangular shape and in that the said test body comprises a rod (3) extending parallel to the longitudinal axis of the cavity and whose end portions are connected to one of the longitudinal edges (11) of the frame (1) by a first and a second flexible blade (5, 6) perpendicular to the said axis, and in that, on the said rod (3), a test mass (12) is suspended by means of a third and fourth flexible blade (14, 15) parallel to the first two ones (5,6), the whole constituted by this test mass (12) and by the third and fourth flexible blades (14, 15) extending at least partially in the volume included between the two first flexible blades (5, 6).

4. An accelerometric sensor as claimed in claim 3,
characterized in that the said longitudinal edge (11) comprises two lateral portions (9, 10) on which are respectively fastened the first two flexible blades (5, 6) and a central recess (21) into which is partially driven the test mass (12) in order that the fastening points of the third and fourth flexible blades (14, 15) on the said test mass (12) are at the same level as the fastening points of the two first blades (5, 6) on the said lateral edge (11).

5. An accelerometric sensor as claimed in claim 1,
characterized in that the said test mass (37) is mounted on the fixed part through the link of a double symmetrical suspension in which are involved two moving support elements (43, 44), each one mounted on the fixed structure by means of two parallel flexible blades (51 to 54) and of two pairs of parallel blades (47 to 50) linking respectively these two support elements (43, 44) to the test mass (37).

6. An accelerometric sensor as claimed in claim 5,
characterized in that the said pendulum structure is achieved by means of a crystalline blade machined in order to constitute an external frame (31) defining a recess (32) of substantially rectangular shape the lateral edges (33, 34) of which present two inwardly directed strips (35, 36) extending substantially according to the symmetry longitudinal axis ΔΔ' of the recess (32), and in that the said test mass (37) presents a substantially rectangular shape and is provided with two lateral strips (40, 41) located in line with the said inward strips (35, 36), in that said test mass (37) is suspended to two longitudinal rods (43, 44) located on each side of the said mass (37) through the link of four transversal flexible blades (47 to 50) fastened to the said lateral strips (40, 41), and in that the said rods (43, 44) are each one suspended on the frame (31) by means of two flexible blades (51 to 54) respectively fastened to the said inward strips (35, 36).

## Patentansprüche

1. Beschleunigungssensor mit einer flachen monolithischen Schwingstruktur, gebildet aus einem Kristallplättchen, das so bearbeitet ist, daß es einen Hohlraum (2) aufweist, in dessen Inneren ein Testkörper mittels mindestens eines ersten und eines zweiten parallelen Plättchens (5, 6) aufgehängt ist, die mit einem festen Bereich der Struktur fest verbunden und in der Ebene dieses Testkörpers biegsam sind, so daß sie sich in dieser Ebene entlang einer im wesentlichen senkrecht zu diesen Plättchen (5, 6) liegenden Achse in Translation verschieben können, dadurch gekennzeichnet, daß dieser Testkörper ein bewegliches Trägerelement (3), das mit den biegsamen Plättchen (5, 6) verbunden ist, und eine Testmasse (12) aufweist, die an diesem Trägerelement (3) durch mindestens ein drittes und ein viertes Plättchen (14, 15), parallel zu den vorhergehenden und biegsam in der Ebene des Testkörpers, aufgehängt ist.

2. Beschleunigungssensor nach Anspruch 1, dadurch gekennzeichnet, daß das dritte und das vierte Plättchen (14, 15) eine Länge aufweisen, die im wesentlichen gleich der des ersten und des zweiten Plättchen (5, 6) ist, und daß sie so angeordnet sind, daß man in Gegenwart einer Beschleunigung entlang der Meßachse (S) eine Kompensierung der transversalen Bewegungen der Testmasse (12) erhält, die durch die Verformungen des ersten und des zweiten Plättchens (5, 6) erzeugt werden, aufgrund der durch die Verformungen des dritten und des vierten Plättchens (14, 15) erzeugten Bewegungen in Gegenrichtung.

3. Beschleunigungssensor nach Anspruch 1, dadurch gekennzeichnet, daß der Hohlraum (2) eine im wesentlichen rechteckige Form aufweist und daß der Testkörper einen Stab (3) aufweist, der sich parallel zur Längsachse des Hohlraums erstreckt und dessen Endbereiche mit einem der Längsränder (11) des Rahmens (1) über ein erstes und ein zweites biegsames Plättchen (5, 6) senkrecht zu dieser Achse verbunden sind, und daß an diesem Stab (3) eine Testmasse (12) mittels eines dritten und eines vierten biegsamen Plättchens (14, 15) aufgehängt ist, die parallel zu den beiden ersten (5, 6) sind, wobei die aus dieser Testmasse (12) und dem dritten und dem vierten biegsamen Plättchen (14, 15) gebildete Einheit sich zumindest teilweise in dem Volumen erstreckt, das zwischen den beiden ersten biegsamen Plättchen (5, 6) liegt.

4. Beschleunigungssensor nach Anspruch 3, dadurch gekennzeichnet, daß der Längsrand (11) zwei Seitenbereiche (9, 10), auf denen jeweils die beiden ersten biegsamen Plättchen (5, 6) verankert sind, und eine zentrale Aushöhlung (21) aufweist, in die sich die Testmasse (12) teilweise einfügt, um zu erreichen, daß die Verankerungspunkte des dritten und des vierten biegsamen Plättchens (14, 15) auf dieser Testmasse (12) sich in der gleichen Höhe befinden wie die Verankerungspunkte der beiden ersten Plättchen (5, 6) auf diesem Seitenrand (11).

5. Beschleunigungssensor nach Anspruch 1, dadurch gekennzeichnet, daß die Testmasse (37) über eine doppelte symmetrische Aufhängung an dem festen Teil befestigt ist, die zwei bewegliche Trägerelemente (43, 44), welche je an der festen Struktur mittels zweier paralleler biegsamer Plättchen (51 bis 54) befestigt sind, und zwei Paare von parallelen Plättchen (47 bis 50) verwendet, welche jeweils diese beiden Trägerelemente (43, 44) mit der Testmasse (37) verbinden.

6. Beschleunigungssensor nach Anspruch 5, dadurch gekennzeichnet, daß die Schwingstruktur mit Hilfe eines Kristallplättchens hergestellt wird, das so bearbeitet ist, daß es einen äußeren Rahmen (31) bildet, der einen Hohlraum (32) von im wesentlichen rechteckiger Form begrenzt, und dessen Seitenränder (33, 34) zwei nach innen zeigende Vorsprünge (35, 36) aufweisen, die sich im wesentlichen entlang der Längssymmetrieachse (ΔΔ') des Hohlraums (32) erstrecken, daß die Testmasse (37) eine im wesentlichen rechteckige Form aufweist und mit zwei seitlichen Vorsprüngen (40, 41) ausgestattet ist, die sich gegenüber den nach innen weisenden Vorsprüngen (35, 36) befinden, daß diese Testmasse (37) über vier biegsame transversale Plättchen (47 bis 50), die auf den seitlichen Vorsrüngen (40, 41) verankert sind, an zwei Längsstäben (43, 44) aufgehängt ist, die sich auf beiden Seiten dieser Masse (37) befinden, und daß die Stäbe (43, 44) je an dem Rahmen (31) mittels zweier biegsamer Plättchen (51 bis 54) aufgehängt sind, die je an den nach innen zeigenden Vorsprüngen (35, 36) verankert sind.
